# EUROPEAN PATENT APPLICATION

(11) **EP 0 781 802 A2**
(43) Date of publication of application: **02.07.1997**
(21) Application number: 96120909.5
(22) Date of filing: 27.12.1996
(51) Int. Cl.: C08K 5/521, C08K 13/04, C08L 67/06

(54) **Fiber-reinforced resin composition**

(30) Priority: 27.12.1995 JP 341249/95
(71) Applicant: Ajinomoto Co., Ltd., Tokyo (JP)
(72) Inventor: Ohashi, Junji, Kawasaki-ku, Kawasaki-shi, Kanagawa-ken (JP); Tanaka, Hiroyuki, Kawasaki-ku, Kawasaki-shi, Kanagawa-ken (JP)
(74) Representative: Strehl Schübel-Hopf Groening & Partner

(57) **Abstract**

A fiber-reinforced resin composition comprising reinforcing fibers along with a particular phosphorus compound comprising an unsaturated double bond or a combination of said phosphorus compound and optionally a particular surfactant is cured.

The cured, fiber-reinforced resin has increased strength, especially increased impact resistance and increased rigidity.

## Description

### Technical Field of the Invention

The present invention relates to a fiber-reinforced resin composition that can be cured to produce resin products having high bending strength and high impact strength.

### Prior Art

In general, fiber-reinforced resins (fiber-reinforced plastics - FRP) have been known to have the advantages of high relative strength, good surface condition of products, high corrosion resistance and high chemical resistance. With such advantages, these are used essentially as parts in housing materials, industrial materials, tanks, containers, ships, cars, trains, etc. Fiber-reinforced resins comprise a synthetic resin, as the binder, and reinforcing fibers added thereto, and are cured. If the adhesiveness between the reinforcing fibers and the resin is insufficient, their mechanical strength including rigidity and flexibility will often be poor. To improve the adhesiveness between the reinforcing fibers and the resin, known is a method of adding a silane coupling agent to the resins. However, the method is still problematic in the improvement in the mechanical strength of the resins. Therefore, any other coupling agents capable of more satisfactorily improving the mechanical strength of the resins are required.

### Problems to be Solved by the Invention

The object of the present invention is to provide a fiber-reinforced resin with improved mechanical strength, especially improved flexibility and rigidity.

### Means for Solving the Problems

As a result of assiduous studies by the inventors it was found that the above-mentioned object can be attained by modifying the surfaces of the reinforcing fibers with a particular organic phosphorus compound having an unsaturated double bond. On the basis of this finding, we have completed the present invention.

Specifically, the present invention provides a fiber-reinforced resin composition comprising reinforcing fibers and a synthetic resin and containing an organic phosphorus compound (A) having an unsaturated double bond represented by the structural formula: 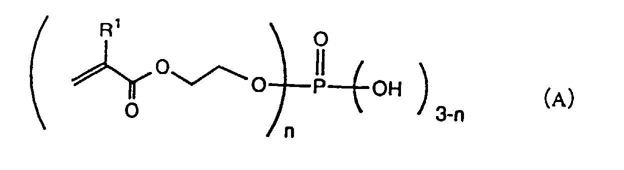 wherein R¹ represents H or CH₃; and n represents 1 or 2. It also provides a fiber-reinforced resin as obtained by curing the composition.

Preferably, the fiber-reinforced resin composition of the present invention additionally contains a surfactant. In particular, the surfactant is preferably selected from compounds of the following general formulae (I) to (VI) to attain much better effects. 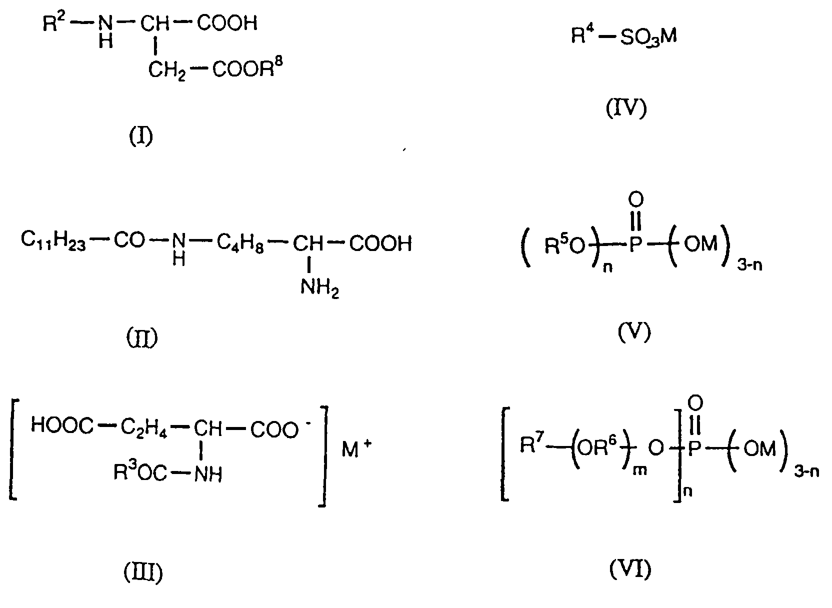 wherein R² and R⁸ may be the same or different and each represents a linear or branched C₇₋₃₀ alkyl group, or a linear or branched C₇₋₃₀ alkenyl group; R³ represents a linear or branched C₇₋₂₁ alkyl group, or a linear or branched C₇₋₂₁ alkenyl group; R⁴ represents a linear or branched C₇₋₃₀ alkyl group, a linear or branched C₇₋₃₀ alkenyl group, or a linear or branched C₇₋₃₀ alkylphenyl group; R⁵ represents a linear or branched C₇₋₃₀ alkyl group, a linear or branched C₇₋₃₀ alkenyl group, or a linear or branched C₇₋₃₀ alkylphenyl group; R⁶ represents a linear or branched C₂₋₁₀ alkylene group; R⁷ represents a linear or branched C₂₋₃₀ alkyl group, or a linear or branched C₇₋₃₀ alkylphenyl group; M represents H, Na, K or a quaternary ammonium group; m represents from 2 to 20; and n represents 1 or 2.

### Embodiments of the Invention

The phosphorus compound having an unsaturated double bond to be used in the present invention has a structure of the above-mentioned formula (A), and includes mono(2-methacryloyloxyethyl) acid phosphate, di(2-methacryloyloxyethyl) acid phosphate, mono(2-acryloyloxyethyl) acid phosphate, and di(2-acryloyloxyethyl) acid phosphate.

The unsaturated double bond comprising phosphorus compound can be obtained with ease by reacting phosphoric anhydride with 2-hydroxyethyl methacrylate or 2-hydroxyethyl acrylate at a molar ratio of 1:2 followed by adding thereto one mol of water to give a mixture of mono(2-methacryloyloxyethyl) acid phosphate and di(2-methacryloyloxyethyl) acid phosphate, or a mixture of mono(2-acryloyloxyethyl) acid phosphate and di(2-acryloyloxyethyl) acid phosphate. The compounds thus obtained can be isolated before use, or the mixture of the compounds can be directly used in the present invention. With any of the isolated compounds and the mixture thereof, the mechanical strength of the fiber-reinforced resin of the present invention is substantially satisfactorily improved. In particular, however, the proportion of mono(2-methacryloyloxyethyl) acid phosphate is desirably 50 % or more to attain better effects. The mixture of mono(2-methacryloyloxyethyl) acid phosphate and di(2-methacryloyloxyethyl) acid phosphate is commercially available as a chemical reagent (for example, Light Ester PM, available from Kyoei-sha Chemical Co.)

Containing the above-mentioned phosphorus compound having an unsaturated double bond therein, the resin composition of the present invention can be shaped and cured to give a cured, fiber-reinforced resin with improved mechanical strength including tenacity and rigidity.

The synthetic resin for use in the present invention is not specifically defined, and any and every synthetic resin capable of being shaped can be employed in the present invention. Concretely, it includes, for example, acrylic resins, phenolic resins, amino resins such as butyl urea and melamine resins, polyester resins such as alkyd resins and unsaturated polyester resins, polyamide resins, epoxy resins, polyvinyl resins such as polyvinyl chloride and polyvinyl acetate, cellulosic resins such as nitrocellulose resins, urethane resins, petroleum resins, fluorine-containing resins, and allyl resins. Of these, preferred are acrylic resins, unsaturated polyester resins, vinyl ester resins and allyl resins, as significantly enhancing the strength of the cured resin products of the invention.

The reinforcing fibers for use in the present invention are not also specifically defined, and any ordinary ones capable of being used for reinforcing resins can be employed in the present invention. Concretely, they include, for example, glass fibers, carbon fibers, aramide fibers, polyamide fibers, boron fibers, ceramic fibers (e.g., silicon carbide fibers, alumina fibers), and metal fibers. These reinforcing fibers may have any form of yarns, rovings, strands, chopped strands, yarn cloths, roving cloths, etc.

The proportion of the phosphorus compound comprising an unsaturated double bond to the reinforcing fibers in the composition of the present invention is not specifically defined, but is preferably from 0.01 to 10 parts by weight, more preferably from 0.1 to 1 part by weight, to 100 parts by weight of the reinforcing fibers. Even if it is more than 10 parts by weight, the mechanical strength of the cured, fiber-reinforced resin to be obtained by shaping and curing the resin composition is not improved further more; but if it is less than 0.01 parts by weight, the intended results cannot be obtained.

The fiber-reinforced resin composition of the present invention may additionally contain a surfactant. The surfactant as referred to herein is a compound having a hydrophilic group and a hydrophobic group in the molecule and capable of activating the interface between the hydrophilic moiety and the hydrophobic moiety in the resin composition. Concretely, it includes, for example, linear or branched, saturated or unsaturated fatty acids such as lauric acid, stearic acid, isostearic acid; salts of such fatty acids, such as Na, K and quaternary ammonium salts thereof; linear or branched, saturated or unsaturated alcohols such as lauryl alcohol, stearyl alcohol, isostearyl alcohol, polyoxyethylene octyl alcohol; sulfosuccinates such as disodium lauryl sulfosuccinate and polyoxyethylene-modified derivatives thereof; sarcosine derivatives such as lauroyl sarcosine and Na, K and quaternary ammonium salts thereof; alkyltrimethylammonium salts such as stearyltrimethylammonium chloride; cationated celluloses such as O-[2-hydroxy-3-(trimethylammonio)propyl]hydroxyethyl cellulose chloride; alkylbetaines, alkylamidobetaines and imidazolines, such as lauryl dimethylaminoacetate betaine, lauroylamidopropylbetaine, 2-lauryl-N-carboxymethyl-N-hydroxyethylimidazolinium betaine; glycine derivatives such as polyoctyl-polyaminoglycine; amine oxides such as lauryldimethylamine oxide; and sorbitan esters of fatty acids such as sorbitan distearate, polyoxyethylene sorbitan monolaurate.

Of the above-mentioned surfactants, preferred are those of the following general formulae (I) to (VI), as improving the affinity of reinforcing fibers for synthetic resins, thereby improving the mechanical and physical properties of the cured, fiber-reinforced resins of the present invention. 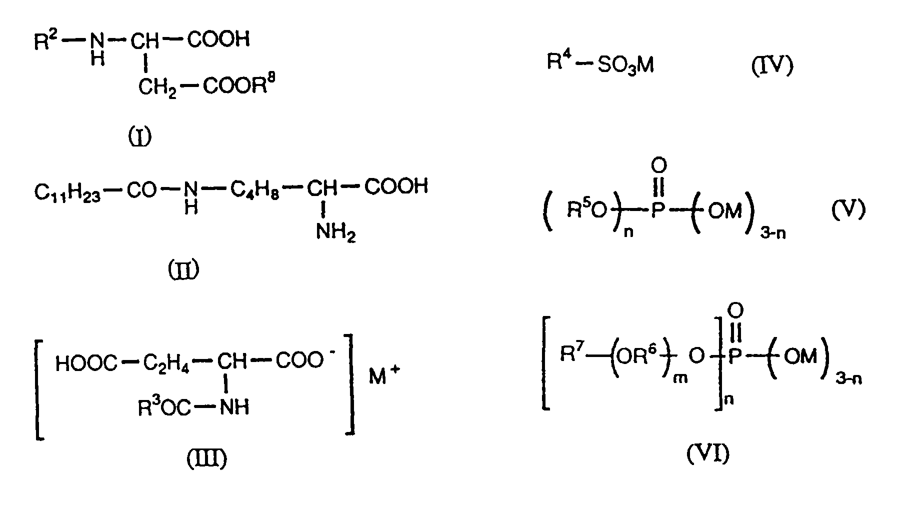 wherein R² and R⁸ may be the same or different and each represents a linear or branched C₇₋₃₀ alkyl group, or a linear or branched C₇₋₃₀ alkenyl group; R³ represents a linear or branched C₇₋₂₁ alkyl group, or a linear or branched C₇₋₂₁ alkenyl group; R⁴ represents a linear or branched C₇₋₃₀ alkyl group, a linear or branched C₇₋₃₀ alkenyl group, or a linear or branched C₇₋₃₀ alkylphenyl group; R⁵ represents a linear or branched C₇₋₃₀ alkyl group, a linear or branched C₇₋₃₀ alkenyl group, or a linear or branched C₇₋₃₀ alkylphenyl group; R⁶ represents a linear or branched C₂₋₁₀ alkylene group; R⁷ represents a linear or branched C₂₋₃₀ alkyl group, or a linear or branched C₇₋₃₀ alkylphenyl group; M represents H, Na, K or a quaternary ammonium group; m represents from 2 to 20; and n represents 1 or 2.

The compound of formula (I) is a β-alkyl N-alkylaspartate, which includes, for example, β-lauryl N-laurylaspartate, and β-stearyl N-stearylaspartate.

The compound of formula (II) is N⁶-lauroyl-L-lysine.

The compound of formula (III) is an N-acylglutamic acid or its salt, and includes, for example, N-lauroyl-L-glutamic acid, N-stearoyl-L-glutamic acid, N-myristoyl-L-glutamic acid, and Na, K and quaternary ammonium salts of these.

The compound of formula (IV) is a linear or branched C₇₋₃₀ alkylsulfonic acid, a linear or branched C₇₋ ₃₀ alkylbenzenesulfonic acid, or an Na, K or quaternary ammonium salt thereof. This includes, for example, dodecylbenzenesulfonic acid, nonylphenylsulfonic acid, heptylsulfonic acid, nonylsulfonic acid, laurylsulfonic acid, stearylsulfonic acid, eicosylsulfonic acid, and triacontylsulfonic acid.

The compound of formula (V) is a linear, branched or aromatic, saturated or unsaturated alkyl acid phosphate or an Na, K or quaternary ammonium salt thereof, and includes, for example, heptyl acid phosphate, octyl acid phosphate, decyl acid phosphate, 2-ethylhexyl acid phosphate, dodecyl acid phosphate, tridecyl acid phosphate, lauryl acid phosphate, stearyl acid phosphate, isostearyl acid phosphate, oleyl acid phosphate, eicosyl acid phosphate, triacontyl acid phosphate, nonylphenyl acid phosphate, and dodecylphenyl acid phosphate. The acid phosphate as referred to herein is an alkyl phosphate having one or two hydroxyl groups. This may be a monophosphate or a diphosphate, or even a mixture of mono-and di-phosphates.

The compound of formula (VI) is an acid phosphate having a group of polyethylene glycol (degree of condensation: from 2 to 20) such as ethylene glycol, diethylene glycol or triethylene glycol, or a group of polypropylene glycol (degree of condensation: from 2 to 20) such as propylene glycol, dipropylene glycol or tripropylene glycol, or an Na, K or quaternary ammonium salt thereof.

The quaternary ammonium salt includes, for example, those with monoethanolamine, diethanolamine, triethanolamine, benzylamine, triethylamine, diethylamine, tributylamine and dibutylamine.

The surfactant content of the composition of the present invention is from 1 to 200 parts by weight, preferably from 3 to 50 parts by weight, relative to 100 parts by weight of the unsaturated double bond comprising phosphorus compound (A). If it is less than 1 part by weight, the affinity of the reinforcing fibers for the synthetic resin is poor. If, however, it is more than 200 parts by weight, the mechanical strength of the cured, fiber-reinforced resin to be obtained by shaping and curing the composition is low.

To produce the fiber-reinforced resin composition of the present invention, for example, employable are a method of directly applying the phosphorus compound (A) having an unsaturated double bond or a mixture of the phosphorus compound (A) and a surfactant (hereinafter referred to as a surface-treating agent of the invention) to reinforcing fibers followed by mixing the fibers with a synthetic resin; and a method of dipping reinforcing fibers in the surface-treating agent of the invention as diluted with a solvent, then removing the solvent, and mixing the fibers with a synthetic resin.

Also employable is a method of mixing a synthetic resin with the surface-treating agent of the invention optionally along with a polymerization initiator, a polymerization promoter, a filler and any other additives, followed by dipping reinforcing fibers in the resulting resin mixture, by which the effects of the present invention can be attained well.

The filler is not specifically defined, and any and every filler generally used in the field of fiber-reinforced resins can be used herein. Concretely, it includes, for example, silica sand, silica rock, gravel, river sand, sea sand, crushed stone, carbon black, acetylene black, vegetable black, graphite, ivory black, bone black, pine black, titanium oxide, black iron oxide, manganese black, ilmenite black, chrome yellow, cadmium yellow, zinc yellow, lead cyanamide, naples yellow, ultramarine yellow, orpiment, vermilion, cadmium red, antimony red, red iron oxide, ultramarine red, ultramarine violet, cobalt violet, manganese violet, prussian blue, cobalt blue, chromium oxide green, Guignet's green, chrome green, zinc green, green mud, green blue, green blue flower, iron oxide yellow, ochre, amber, white carbon, synthetic silicate, amorphous silica, whiting, calcium carbonate, calcium sulfate, calcium hydroxide, chalk, barite powder, barium sulfate, clay, polishing powder, baked earth powder, talc, silica, glass powder, silica rock powder, diatomaceous earth, asbestos, wollastonite, calcium silicate, alumina, gypsum, hansa yellow, toluidine red, lithol red, phthalocyanine blue, phthalocyanine green, quinacridone red, aluminium powder, bronze powder, red lead, lead chromate, lead sulfate, zinc powder, lead suboxide, magnetic ferrite powder comprising MO·Fe₂O₃ (M is one or more of Ba, Sr, Ca, Mg, Zn and Pb), samarium cobalt, neodium iron cobalt, neodymium iron cobalt, zirconium cobalt, aluminium, iron, zinc, copper, silver, nickel, tungsten, molybdenum, rhenium, niobium, tantalum, and lead. In particular, carbons, metal hydroxides, metal oxides, metals, carbonates, sulfates, chromates, silicates, organic pigments and magnetic powders produce better results. The shape of the filler is not defined at all, and the filler may be in any of spherical, rod-like, flaky and needle-like forms. Its size is not also specifically defined but is preferably 1 mm or smaller, since such finely divided fillers produce better results. These fillers can be used singly or as mixtures of two or more with no problem.

These fillers may be surface-treated, with no problem, with any surface-treating agents such as salts of fatty acids, silane coupling agents, titanate coupling agents, the unsaturated double bond comprising phosphorus compounds (A) of the invention, and surfactants such as those mentioned hereinabove.

To produce the fiber-reinforced resin composition of the present invention, solvents can be used with no problem for the purpose of adjusting the viscosity of the composition, if desired. For this, any and every solvent capable of dissolving resins can be used with no limitation. For example, employable are styrenic solvents such as styrene, vinyltoluene, divinylbenzene, chlorostyrene; esters of (meth)acrylic acid with a monoalcohol such as methyl alcohol, ethyl alcohol, 2-ethylhexyl alcohol, n-octyl alcohol, lauryl alcohol, oleyl alcohol, benzyl alcohol; and esters of (meth)acrylic acid with a polyalcohol such as ethylene glycol, diethylene glycol, polyethylene glycol, 1,2-propanediol, 1,3-propanediol, propylene glycol, glycerin, pentaerythritol, hydroquinone, bisphenol A. Any of these can be mixed with the composition of the invention, if desired.

The fiber-reinforced resin of the present invention can be obtained by curing the above-mentioned, fiber-reinforced resin composition. Various methods can be employed to cure the composition. For example, the composition can be cured by exposing it to light (e.g., ultraviolet rays, visible rays), heat, electron rays or high-energy radiations, or can be cured with an ionic polymerization initiator, such as Lewis acids, protonic acids and alkali metals. If desired, photosensitizers, such as acetophenones, can be used in such curing methods.

A curing agent can be used in the thermal curing of the composition. Concretely, the curing agent includes, for example, the following compounds.

Organic peroxides including ketone peroxides such as methyl ethyl ketone peroxide; diacyl peroxides such as benzoyl peroxide; peroxy dicarbonates such as diisopropylperoxy dicarbonate; peroxy ketals such as 1,1-bis(t-butylperoxy)cyclohexane; hydroperoxides such as t-butylhydroperoxide; and peroxy esters such as t-butyl peroxypivalate; and also azo compounds such as azobisisobutyronitrile; and inorganic oxides such as hydrogen peroxide-ferrous salts. These can be used singly or as mixtures of two or more.

Where organic peroxides are used for thermal curing the composition of the invention, a curing promoter can be used along with the curing agent in order to promote the polymerization or to cure the composition at low temperatures. Concretely, the curing promoter includes, for example, salts of organic acids, such as cobalt naphthenate; aromatic tertiary amines such as dimethylaniline; alcohols such as 2,2-(phenylimino)diethanol; sulfinic acids such as p-chlorobenzenesulfinic acids, and salts of sulfinic acids; metal soaps with vanadium; and mercaptan compounds.

One typical method of obtaining such a cured, fiber-reinforced resin from the fiber-reinforced resin composition of the present invention comprises mixing the surface-treating agent of the invention with a synthetic resin, a polymerization initiator and a suitable amount of a solvent, for example, in a mixer, spreading a glass cloth (roving cloth) as previously heat-cleaned at 650°C all over the inner surface of a mold, casting the mixture prepared previously into the mold, and optionally vibrating it with a vibrator. After having been left as it is for several minutes, the mixture is cured under heat at from 40°C to 100°C for several hours to give a cured, fiber-reinforced resin.

It is believed that the effects of the present invention can be attained through the mechanism mentioned below. The surface-treating agent of the present invention has good affinity for reinforcing fibers, which therefore rapidly adsorb the agent on their surfaces. In addition, since the surface-treating agent of the invention can wet well organic matrices such as resins and solvents, the cured, fiber-reinforced resin of the invention is provided with improved flexibility. Moreover, since the agent has a terminal double bond at which it can react with resins and some solvents, the cured, fiber-reinforced resin of the invention is furnished with improved rigidity.

Now, the present invention is described in detail with reference to the following examples, which, however, are not intended to restrict the scope of the invention but are to exemplify some embodiments of the invention.

### Example 1:

40 parts by weight of a roving cloth (glass fiber cloth, REW810-M, produced by Nippon Sheet Glass Co.) that had been previously heat-cleaned at 650°C was spread all over the inner surface of a mold. On the other hand, 60 parts by weight of an unsaturated polyester (Polymal 9305Z with from 4 to 6 Ps; produced by Takeda Chemical Industries, Ltd.), 0.6 parts by weight of a curing catalyst (Perbutyl O; t-butyl peroxy-2-ethylhexanoate, produced by Nippon Oils & Fats Co.), and 0.4 parts by weight of a 1/1 mixture of mono(2-methacryloyloxyethyl) acid phosphate and di(2-methacryloyloxyethyl) acid phosphate were mixed for 10 minutes in a mixer. The resulting mixture was cast into the mold prepared previously. After having been left as it was for 10 minutes, this was pre-heated and then cured under heat at 90°C for 2 hours. Thus were prepared test pieces of a cured, fiber-reinforced resin sample. These were subjected to a bending test and a Charpy impact test to determine the mechanical strength of the cured sample. In addition, the outward appearance of the test pieces was visually observed. In this visual test, those with transparency were rated good, while those with no transparency were rated bad.

### Example 2:

40 parts by weight of a roving cloth (glass fiber cloth, REW810-M, produced by Nippon Sheet Glass Co.) that had been previously heat-cleaned at 650°C was spread all over the inner surface of a mold. On the other hand, 60 parts by weight of an unsaturated polyester (Polymal 9305Z with from 4 to 6 Ps; produced by Takeda Chemical Industries, Ltd.), 0.6 parts by weight of a curing catalyst (Perbutyl O; t-butyl peroxy-2-ethylhexanoate, produced by Nippon Oils & Fats Co.), 0.3 parts by weight of a 1/1 mixture of mono(2-methacryloyloxyethyl) acid phosphate and di(2-methacryloyloxyethyl) acid phosphate, and 0.1 parts by weight of β-lauryl N-laurylaspartate (FAMEX A-12, produced by Ajinomoto Co.) were mixed for 10 minutes in a mixer. The resulting mixture was cast into the mold prepared previously. After having been left as it was for 10 minutes, this was pre-heated and then cured under heat at 90°C for 2 hours. Thus were prepared test pieces of a cured, fiber-reinforced resin sample. These were subjected to a bending test and a Charpy impact test to determine the mechanical strength of the cured sample.

### Example 3:

The same process as in Example 2 was repeated herein, except that 0.1 parts by weight of N⁶-lauroyl-L-lysine (Amihope LL, produced by Ajinomoto Co.) was used in place of 0.1 parts by weight of β-lauryl N-laurylaspartate (FAMEX A-12, produced by Ajinomoto Co.).

### Example 4:

The same process as in Example 2 was repeated, except that 0.1 parts by weight of potassium N-lauroyl-L-glutamate (Amisoft LK-11, produced by Ajinomoto Co.) was used in place of 0.1 parts by weight of β-lauryl N-laurylaspartate (FAMEX A-12, produced by Ajinomoto Co.).

### Example 5:

The same process as in Example 2 was repeated, except that 0.1 parts by weight of dodecylbenzenesulfonic acid was used in place of 0.1 parts by weight of β-lauryl N-laurylaspartate (FAMEX A-12, produced by Ajinomoto Co.).

### Example 6:

The same process as in Example 2 was repeated, except that 0.1 parts by weight of 2-ethylhexyl phosphate (Phosrex A-8, produced by Sakai Chemical Industry Co.) was used in place of 0.1 parts by weight of β-lauryl N-laurylaspartate (FAMEX A-12, produced by Ajinomoto Co.).

### Example 7:

The same process as in Example 2 was repeated, except that 0.1 parts by weight of tridecyl phosphate (Phosrex A-13, produced by Sakai Chemical Industry Co.) was used in place of 0.1 parts by weight of β-lauryl N-laurylaspartate (FAMEX A-12, produced by Ajinomoto Co.).

### Example 8:

The same process as in Example 2 was repeated, except that 0.1 parts by weight of polyoxyethylene alkyl ether phosphoric acid (Phosfanol RS-710, produced by Toho Chemical Industry Co.) was used in place of 0.1 parts by weight of β-lauryl N-laurylaspartate (FAMEX A-12, produced by Ajinomoto Co.).

### Comparative Example 1:

The same process as in Example 1 was repeated, except that 0.4 parts by weight of the 1/1 mixture of mono(2-methacryloyloxyethyl) acid phosphate and di(2-methacryloyloxyethyl) acid phosphate was not added to the resin.

### Comparative Example 2:

The same process as in Example 1 was repeated, except that 0.4 parts by weight of 3-methacryloyloxypropyl-trimethoxysilane (A-174, produced by Nippon Uniqur Co.) was used in place of 0.4 parts by weight of the 1/1 mixture of mono(2-methacryloyloxyethyl) acid phosphate and di(2-methacryloyloxyethyl) acid phosphate.

### Comparative Example 3:

The same process as in Example 1 was repeated, except that 0.4 parts by weight of a titanate coupling agent (PLENACT KRTTS, produced by Ajinomoto Co.) was used in place of 0.4 parts by weight of the 1/1 mixture of mono(2-methacryloyloxyethyl) acid phosphate and di(2-methacryloyloxyethyl) acid phosphate.

### Comparative Example 4:

The same process as in Example 1 was repeated, except that the roving cloth (REW810-M, produced by Nippon Sheet Glass Co.) was not heat-cleaned and that 0.4 parts by weight of the 1/1 mixture of mono(2-methacryloyloxyethyl) acid phosphate and di(2-methacryloyloxyethyl) acid phosphate was not added to the resin.

The results of Examples 1 to 8 and Comparative Examples 1 to 4 are shown in Table 1.

**Table 1**

| | Bending Strength kgf/cm² | Inpact Strength kgfcm/cm² | Thermal Deformation Temperature °C | Outward Appearance |
|---|---|---|---|---|
| Example 1 | 970 | 9.4 | 114 | Good |
| Example 2 | 934 | 9.3 | 109 | Good |
| Example 3 | 918 | 8.8 | 105 | Good |
| Example 4 | 885 | 9.1 | 98 | Good |
| Example 5 | 840 | 8.9 | 88 | Good |
| Example 6 | 965 | 10.5 | 110 | Good |
| Example 7 | 932 | 9.1 | 108 | Good |
| Example 8 | 960 | 9.2 | 106 | Good |
| Comparative Example 1 | 370 | 5.5 | 71 | Bad |
| Comparative Example 2 | 712 | 7.6 | 113 | Good |
| Comparative Example 3 | 473 | 7.7 | 69 | Bad |
| Comparative Example 4 | 725 | 7.8 | 110 | Good |

### Example 9:

40 parts by weight of a roving cloth (glass fiber cloth, REW810-M, produced by Nippon Sheet Glass Co.) that had been previously heat-cleaned at 650°C was spread all over the inner surface of a mold. On the other hand, 52 parts by weight of an MMA solution of an acrylic resin (ACRYSIRUP SY-430, produced by Mitsubishi Rayon Co.), 12 parts by weight of methyl methacrylate (produced by Junsei Chemical Co.), 0.6 parts by weight of a curing catalyst (Perbutyl O, produced by Nippon Oils & Fats Co.), and 0.4 parts by weight of a 1/1 mixture of mono(2-methacryloyloxyethyl) acid phosphate and di(2-methacryloyloxyethyl) acid phosphate were mixed for 10 minutes in a mixer. The resulting mixture was cast into the mold prepared previously. After having been left as it was for 10 minutes, this was preheated and then cured under heat at 90°C for 2 hours. Thus were prepared test pieces of a cured, fiber-reinforced resin sample. These were subjected to a bending test and a Charpy impact test to determine the mechanical strength of the cured sample.

### Examples 10 to 16:

40 parts by weight of a roving cloth (glass fiber cloth, REW810-M, produced by Nippon Sheet Glass Co.) that had been previously heat-cleaned at 650°C was spread all over the inner surface of a mold. On the other hand, 52 parts by weight of an MMA solution of an acrylic resin (ACRYSIRUP SY-430, produced by Mitsubishi Rayon Co.), 12 parts by weight of methyl methacrylate (produced by Junsei Chemical Co.), 0.6 parts by weight of a curing catalyst (Perbutyl O, produced by Nippon Oils & Fats Co.), 0.3 parts by weight of a 1/1 mixture of mono(2-methacryloyloxyethyl) acid phosphate and di(2-methacryloyloxyethyl) acid phosphate, and 0.1 parts by weight of the surfactant as used in any of Examples 2 to 8 were mixed for 10 minutes in a mixer. The resulting mixture was cast into the mold prepared previously. After having been left as it was for 10 minutes, this was pre-heated and then cured under heat at 90°C for 2 hours. Thus were prepared test pieces of cured, fiber-reinforced resin samples. These were subjected to a bending test and a Charpy impact test to determine the mechanical strength of the cured samples.

### Comparative Example 5:

The same process as in Example 9 was repeated, except that 0.4 parts by weight of the 1/1 mixture of mono(2-methacryloyloxyethyl) acid phosphate and di(2-methacryloyloxyethyl) acid phosphate was not added to the resin.

### Comparative Example 6:

The same process as in Example 9 was repeated, except that 0.4 parts by weight of 3-methacryloyloxypropyl-trimethoxysilane (A-174, produced by Nippon Uniqur Co.) was used in place of 0.4 parts by weight of the 1/1 mixture of mono(2-methacryloyloxyethyl) acid phosphate and di(2-methacryloyloxyethyl) acid phosphate.

### Comparative Example 7:

The same process as in Example 9 was repeated, except that 0.4 parts by weight of a titanate coupling agent (PLENACT KRTTS, produced by Ajinomoto Co.) was used in place of 0.4 parts by weight of the 1/1 mixture of mono(2-methacryloyloxyethyl) acid phosphate and di(2-methacryloyloxyethyl) acid phosphate.

### Comparative Example 8:

The same process as in Example 9 was repeated, except that the roving cloth (REW810-M, produced by Nippon Sheet Glass Co.) was not heat-cleaned and that 0.4 parts by weight of the 1/1 mixture of mono(2-methacryloyloxyethyl) acid phosphate and di(2-methacryloyloxyethyl) acid phosphate was not added to the resin.

The results of Examples 9 to 16 and Comparative Examples 5 to 8 are shown in Table 2.

**Table 2**

| | Bending Strength kgf/cm² | Inpact Strength kgfcm/cm² | Thermal Deformation Temperature °C | Outward Appearance |
|---|---|---|---|---|
| Example 9 | 1180 | 9.7 | 116 | Good |
| Example 10 | 921 | 9.5 | 108 | Good |
| Example 11 | 943 | 9.1 | 108 | Good |
| Example 12 | 890 | 9.3 | 98 | Good |
| Example 13 | 852 | 8.9 | 91 | Good |
| Example 14 | 1092 | 10.8 | 111 | Good |
| Example 15 | 1024 | 9.1 | 109 | Good |
| Example 16 | 1076 | 9.4 | 103 | Good |
| Comparative Example 5 | 348 | 6.0 | 74 | Bad |
| Comparative Example 6 | 753 | 7.8 | 115 | Good |
| Comparative Example 7 | 531 | 8.0 | 70 | Bad |
| Comparative Example 8 | 775 | 7.7 | 115 | Good |

### Example 17:

40 parts by weight of a roving cloth (glass fiber cloth, REW810-M, produced by Nippon Sheet Glass Co.) that had been previously heat-cleaned at 650°C was dipped in a 1 % ethanol solution of a 1/1 mixture of mono(2-methacryloyloxyethyl) acid phosphate and di(2-methacryloyloxyethyl) acid phosphate, and then dried at 80° C to remove the solvent, whereby 0.5 % by weight of the mixture was adhered to the roving cloth. The roving cloth thus surface-treated was mixed with 52 parts by weight of an MMA solution of an acrylic resin (7X SY-430, produced by Mitsubishi Rayon Co.), 12 parts by weight methyl methacrylate (produced by Junsei Chemical Co.), and 0.6 parts by weight of a curing catalyst (Perbutyl O, produced by Nippon Oils & Fats Co.), for 10 minutes in a mixer, and the resulting mixture was cast into a mold. After having been left as it was for 10 minutes, this was pre-heated and then cured under heat at 90°C for 2 hours. Thus were prepared test pieces of a cured, fiber-reinforced resin sample. These were subjected to a bending test and a Charpy impact test to determine the mechanical strength of the cured sample.

### Examples 18 to 24:

40 parts by weight of a roving cloth (glass fiber cloth, REW810-M, produced by Nippon Sheet Glass Co.) that had been previously heat-cleaned at 650°C was dipped in a 1 % ethanol solution of a 1/1 mixture of mono(2-methacryloyloxyethyl) acid phosphate and di(2-methacryloyloxyethyl) acid phosphate that contained the surfactant as used in any of Examples 2 to 8 at a ratio by weight of the mixture to the surfactant, 3:1. Then, the cloth was dried at 80°C to remove the solvent, whereby 0.5 % by weight of the mixture of the surface-treating agent was adhered to the cloth. The roving cloth thus surface-treated was mixed with 52 parts by weight of an MMA solution of an acrylic resin (ACRYSIRUP SY-430, produced by Mitsubishi Rayon Co.), 12 parts by weight methyl methacrylate (produced by Junsei Chemical Co.), and 0.6 parts by weight of a curing catalyst (Perbutyl O, produced by Nippon Oils & Fats Co.), for 10 minutes in a mixer, and the resulting mixture was cast into a mold. After having been left as it was for 10 minutes, this was pre-heated and then cured under heat at 90°C for 2 hours. Thus were prepared test pieces of cured, fiber-reinforced resin samples. These were subjected to a bending test and a Charpy impact test to determine the mechanical strength of the cured samples.

### Comparative Example 9:

40 parts by weight of a roving cloth (REW810-M, produced by Nippon Sheet Glass Co.) that had been previously heat-cleaned at 650°C was dipped in ethanol only, without adding thereto a 1/1 mixture of mono(2-methacryloyloxyethyl) acid phosphate and di(2-methacryloyloxyethyl) acid phosphate, and then dried at 80° C to remove the solvent. The roving cloth was thereafter processed in the same manner as in Example 17.

### Comparative Example 10:

The same process as in Example 17 was repeated, except that 3-methacryloyloxypropyl-trimethoxysilane (A-174, produced by Nippon Uniqur Co.) was used in place of the 1/1 mixture of mono(2-methacryloyloxyethyl) acid phosphate and di(2-methacryloyloxyethyl) acid phosphate, that a mixed solvent of ethanol-water (ethanol:water = 9:1) was used in place of ethanol, and that the drying at 80°C was followed by additional drying at 110°C for 1 hour to complete the surface treatment.

### Comparative Example 11:

The same process as in Example 17 was repeated, except that a titanate coupling agent (PLENACT KRTTS, produced by Ajinomoto Co.) was used in place of the 1/1 mixture of mono(2-methacryloyloxyethyl) acid phosphate and di(2-methacryloyloxyethyl) acid phosphate.

### Comparative Example 12:

40 parts by weight of a roving cloth (REW810-M, produced by Nippon Sheet Glass Co.) was dipped in ethanol only, without adding thereto a 1/1 mixture of mono(2-methacryloyloxyethyl) acid phosphate and di(2-methacryloyloxyethyl) acid phosphate, and then dried at 80° C to remove the solvent. The roving cloth was thereafter processed in the same manner as in Example 17.

The results of Examples 17 to 24 and Comparative Examples 9 to 12 are shown in Table 3.

**Table 3**

| | Bending Strength kgf/cm² | Inpact Strength kgfcm/cm² | Thermal Deformation Temperature °C | Outward Appearance |
|---|---|---|---|---|
| Example 17 | 1150 | 9.8 | 115 | Good |
| Example 18 | 946 | 9.1 | 110 | Good |
| Example 19 | 952 | 9.0 | 107 | Good |
| Example 20 | 903 | 9.1 | 97 | Good |
| Example 21 | 901 | 9.0 | 90 | Good |
| Example 22 | 1104 | 11.0 | 110 | Good |
| Example 23 | 1051 | 9.5 | 108 | Good |
| Example 24 | 1080 | 9.4 | 105 | Good |
| Comparative Example 9 | 350 | 6.1 | 72 | Bad |
| Comparative Example 10 | 791 | 7.8 | 114 | Good |
| Comparative Example 11 | 548 | 8.1 | 70 | Bad |
| Comparative Example 12 | 783 | 8.0 | 112 | Good |

### Advantages of the Invention

As has been described hereinabove, it is understood that the cured, fiber-reinforced resin as obtained from the fiber-reinforced resin composition of the present invention has both increased bending strength and increased impact strength.

## Claims

1. A fiber-reinforced resin composition comprising reinforcing fibers and a synthetic resin and containing an organic phosphorus compound (A) having an unsaturated double bond represented by the structural formula: 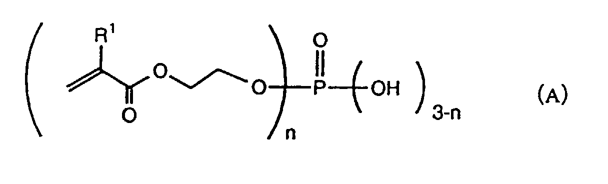 wherein R¹ represents H or CH₃; and n represents 1 or 2.

2. The fiber-reinforced resin composition as claimed in claim 1, which further contains a surfactant.

3. The fiber-reinforced resin composition as claimed in claim 2, wherein the surfactant is represented by any of the general formulae (I) to (VI): 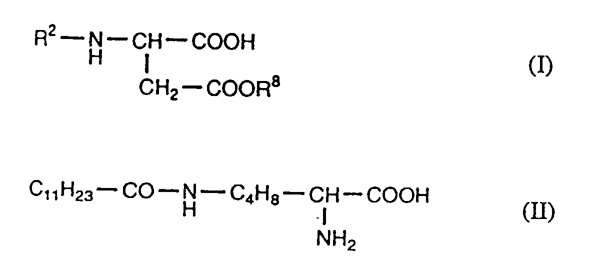 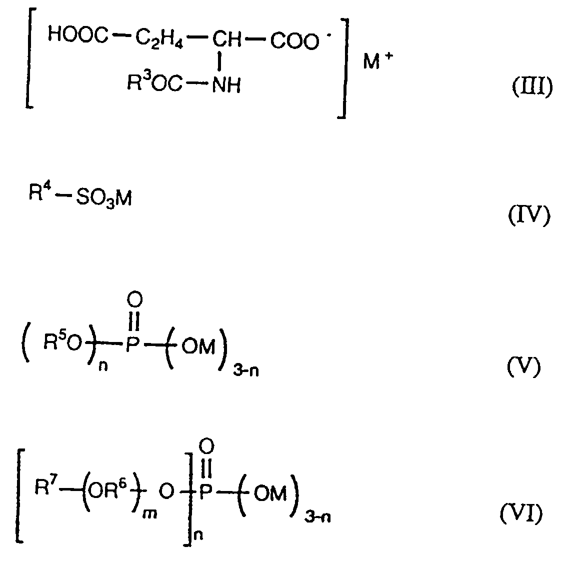 wherein R² and R⁸ may be the same or different and each represents a linear or branched C₇₋₃₀ alkyl group, or a linear or branched C₇₋₃₀ alkenyl group; R³ represents a linear or branched C₇₋₂₁ alkyl group, or a linear or branched C₇₋₂₁ alkenyl group; R⁴ represents a linear or branched C₇₋₃₀ alkyl group, a linear or branched C₇₋₃₀ alkenyl group, or a linear or branched C₇₋₃₀ alkylphenyl group; R⁵ represents a linear or branched C₇₋₃₀ alkyl group, a linear or branched C₇₋₃₀ alkenyl group, or a linear or branched C₇₋₃₀ alkylphenyl group; R⁶ represents a linear or branched C₂₋₁₀ alkylene group; R⁷ represents a linear or branched C₂₋₃₀ alkyl group, or a linear or branched C₇₋₃₀ alkylphenyl group; M represents H, Na, K or a quaternary ammonium group; m represents from 2 to 20; and n represents 1 or 2.

4. The fiber-reinforced resin composition as claimed in any one of the claims 1 to 3, wherein the synthetic resin is selected from acrylic resins, unsaturated polyester resins, vinyl ester resins, and allyl resins.

5. The fiber-reinforced resin composition as claimed in any one of the claims 1 to 3, wherein the reinforcing fibers are selected from glass fibers, carbon fibers, aramide fibers, amide fibers, boron fibers, ceramic fibers, and metal fibers.

6. A fiber-reinforced resin as obtained by curing the fiber-reinforced resin composition as claimed in any one of the claims 1 to 5.
